Europäisches Patentamt

European Patent Office

Office européen des brevets

(19)

(11) **EP 0 871 143 B1**

(12) **FASCICULE DE BREVET EUROPEEN**

(45) Date de publication et mention
de la délivrance du brevet:
**02.06.2004 Bulletin 2004/23**

(51) Int Cl.⁷: **G06T 5/00**, G06T 7/20

(21) Numéro de dépôt: **98200969.8**

(22) Date de dépôt: **27.03.1998**

(54) **Système de traitement d'une séquence d'images bruitées, et appareil d'examen médical incluant un tel système**

Verarbeitungssystem einer verrauschten Bildsequenz und medizinisches Untersuchungsgerät mit einem solchen System

Noisy images sequence processing system and medical examination apparatus including this system

(84) Etats contractants désignés:
**DE FR GB NL**

(30) Priorité: **08.04.1997 FR 9704282**

(43) Date de publication de la demande:
**14.10.1998 Bulletin 1998/42**

(73) Titulaire: **Koninklijke Philips Electronics N.V.**
**5621 BA Eindhoven (NL)**

(72) Inventeur: **Florent, Raoul**
**75008 Paris (FR)**

(74) Mandataire: **Lottin, Claudine**
**Société Civile SPID,**
**156, Boulevard Haussmann**
**75008 Paris (FR)**

(56) Documents cités:
**EP-A- 0 025 730**

• **AUFRICHTIG R ET AL: "X-RAY FLUOROSCOPY SPATIO-TEMPORAL FILTERING WITH OBJECT DETECTION" IEEE TRANSACTIONS ON MEDICAL IMAGING, vol. 14, no. 4, 1 décembre 1995, pages 733-746, XP000548591**
• **AUFRICHTIG R ET AL: "SPATIO-TEMPORAL X-RAY FLUOROSCOPY FILTERING USING OBJECT DETECTION" PROCEEDINGS OF THE COMPUTERS IN CARDIOLOGY CONFERENCE, LONDON, SEPT. 5 - 8, 1993, no. -, 5 septembre 1993, INSTITUTE OF ELECTRICAL AND ELECTRONICS ENGINEERS, pages 587-590, XP000478365**
• **KLEIHORST R P ET AL: "NOISE REDUCTION OF IMAGE SEQUENCES USING MOTION COMPENSATION AND SIGNAL DECOMPOSITION" IEEE TRANSACTIONS ON IMAGE PROCESSING, vol. 4, no. 3, 1 mars 1995, pages 274-284, XP000501902**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne un système de traitement d'une image bruitée dans une séquence d'images incluant des moyens de filtrage temporel du bruit. L'invention concerne aussi un appareil d'examen médical incluant un tel système.

L'invention trouve son application dans l'industrie de fabrication des appareils d'examen médicaux aux rayons X.

Un appareil d'examen aux rayons X incluant un dispositif d'imagerie est déjà connu du brevet US 5467380 (DE JONGE et al.). Le dispositif d'imagerie produit une séquence d'images et a un système de traitement des images de la séquence pour la réduction du bruit. Ce système comprend des premiers moyens de filtrage temporel récursif qui effectuent une somme d'une image déjà filtrée temporellement avec une image de différences pondérée par un facteur de récursion. Ce facteur de récursion est fourni par une Table et est en proportion inverse de la différence à laquelle il est appliqué. L'image de différences est formée par un calcul, en des points de localisation donnée, des différences d'intensité entre l'image bruitée à traiter et une image précédente déjà filtrée temporellement. Ce système comprend aussi des moyens de détection de mouvement constitués d'un comparateur qui compare les différences d'intensité dans l'image de différences à un seuil de bruit et qui décrète la présence d'un objet en mouvement quand une différence dans l'image de différences excède ce seuil. Ce système comprend en outre des moyens de filtrage spatial pour fournir, à partir de l'image bruitée, une image lissée par filtrage passe-bas. Ce système comporte enfin des moyens pour réaliser la somme de ladite image lissée par filtrage passe-bas avec l'image filtrée temporellement récursivement, ces images étant affectées respectivement de poids qui favorisent ou bien l'image filtrée spatialement dans le cas où un objet en mouvement a été détecté, ou bien l'image filtrée temporellement dans le cas inverse.

Un problème est que ce système connu ne permet pas de distinguer les différences d'intensité dues aux pics de bruit de celles dues aux mouvements. Un autre problème est que ce système connu fournit à sa sortie une image lissée passe-bas au lieu d'une image filtrée temporellement dans le cas où un objet en mouvement a été détecté : un tel filtrage spatial passe-bas appliqué directement sur une image bruitée amortit les contours, d'où il résulte que des fins objets en mouvement peuvent être perdus.

EP0025730 décrit un système de traitement d'une image bruitée dans une séquence d'images bruitées qui utilise un filtre temporel récursif. Le facteur de récursion est déterminé par un détecteur de mouvement comprenant une filtrage du signal de difference en une dimension spatial, qui fournit une mesure de probabilité de mouvement, et un circuit de décision à deux seuils.

Un but de la présente invention est de proposer un tel système de traitement d'image amélioré, pour filtrer le bruit dans une séquence d'images représentant des très fins objets, tels que cathéters ou fibres optiques, sans exclusion de parties d'images représentant de tels très fins objets en mouvement.

Ce but est atteint au moyen d'un système de traitement d'une image bruitée dans une séquence d'images, incluant des moyens pour extraire un échantillon temporel bruité à une localisation donnée dans l'image bruitée et pour fournir un échantillon correspondant filtré temporellement récursivement pour construire une image filtrée du bruit, ce système comprenant :

des moyens de filtrage temporel récursif ayant des moyens pour effectuer une somme d'un échantillon correspondant d'une image précédente déjà filtrée de la séquence avec un échantillon correspondant d'une image des différences entre l'image bruitée et l'image précédente filtrée, et pondéré par un facteur de récursion,
des moyens de filtrage spatial bidimensionnel appliqués à ladite image des différences, pour rehausser des échantillons spatialement cohérents et fournir une mesure de probabilité de mouvement liée aux dits échantillons spatialement cohérents,
et des moyens d'application d'une fonction scalaire sur ladite mesure de probabilité de mouvement pour générer ledit facteur de récursion en dépendance de la mesure de probabilité de mouvement.

Le système selon l'invention présente entre autres avantages : d'être simple ; de pouvoir travailler en temps réel ; d'appliquer le filtrage temporel efficacement dans les parties d'images avec et sans objet en mouvement en sorte que les bords des objets ne sont pas amortis et que les très fins objets en mouvement ne sont pas perdus ; d'éliminer fortement les pics de bruit.

L'invention concerne également un appareil d'examen médical à rayons X, pour produire une séquence d'images de rayons X, comprenant un détecteur de rayons X pour convertir les images successives de la séquence en signaux numériques et comprenant un tel système de traitement d'une image bruitée dans une séquence d'images, pour fournir une image filtrée du bruit.

Cet appareil a l'avantage de fournir des meilleures images, particulièrement dans le cas où l'intensité d'illumination de l'objet dont on forme une image est faible, permettant néanmoins à un opérateur de suivre avec précision des objets très fins en mouvement durant le déroulement de la séquence d'images.

L'invention est décrite ci-après en détail en référence aux figures schématiques annexées, dont :

la FIG.1A représente un appareil à rayons X, et la FIG.1B un système de traitement du bruit d'une image ;
les FIGs.2A et 2B représentent respectivement une séquence d'images bruitées et une image des différences ;

les FIGs.3A et 3B représentent des premiers et seconds moyens de génération d'un facteur de récursion pour ce système ;

les FIGs.4A et 4B représentent chacune un signal temporel bruité S(T) en pointillé et un signal temporel filtré Y(T) en trait plein ; et la FIG.4C représente un signal temporel bruité ;

la FIG.5A représente un filtre spatial bidimensionnel $F_{2D}$; et la FIG.5B représente une fonction scalaire $f_1$.

## I/ Appareil à rayons X

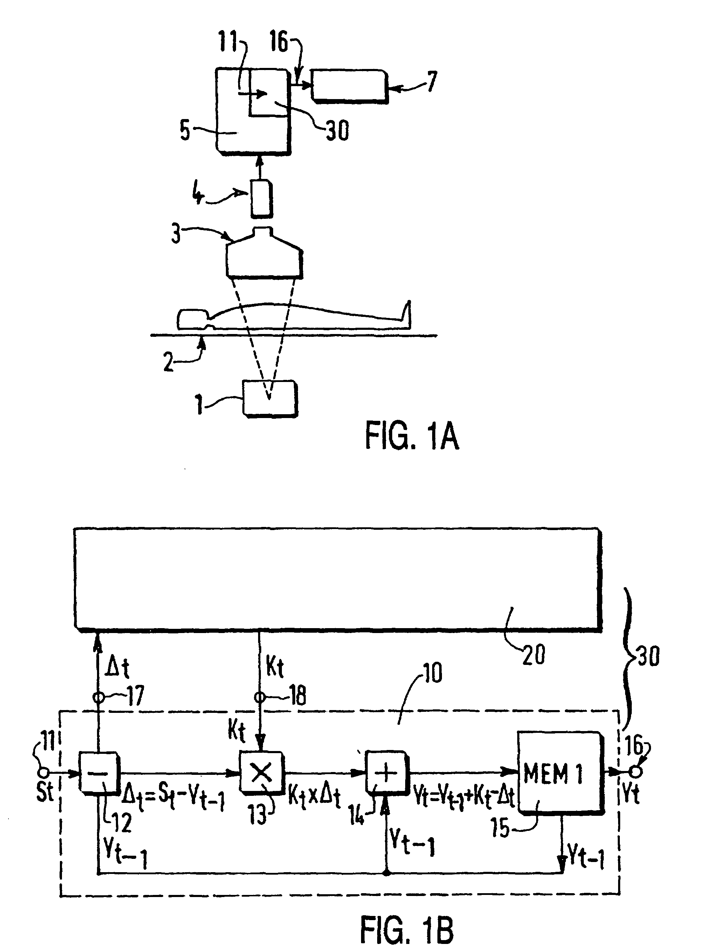

La FIG.1A représente à titre d'exemple un appareil d'examen aux rayons X qui comprend une source 1 de rayons X ; une table 2 pour recevoir un patient ; un dispositif intensificateur d'image 3 couplé à un tube vidéo 4, qui fournit des données à un système 5 de traitement numérique d'image comprenant un processeur ayant des moyens 30 appropriés à réaliser un système de traitement d'images. Ce processeur comprend plusieurs sorties dont une sortie 16 couplée à un moniteur 7 pour la visualisation de la séquence d'images radiographiques ou d'images d'intensité.

La présente invention ne tient pas compte de la méthode par laquelle la séquence d'images numériques a été obtenue, ni de la nature des objets qu'elle représente, mais concerne seulement le filtrage de ces images dans cette séquence pour éliminer le bruit et les pics de bruit sans exclusion d'objets en mouvement.

## II/ Système de filtrage temporel du bruit

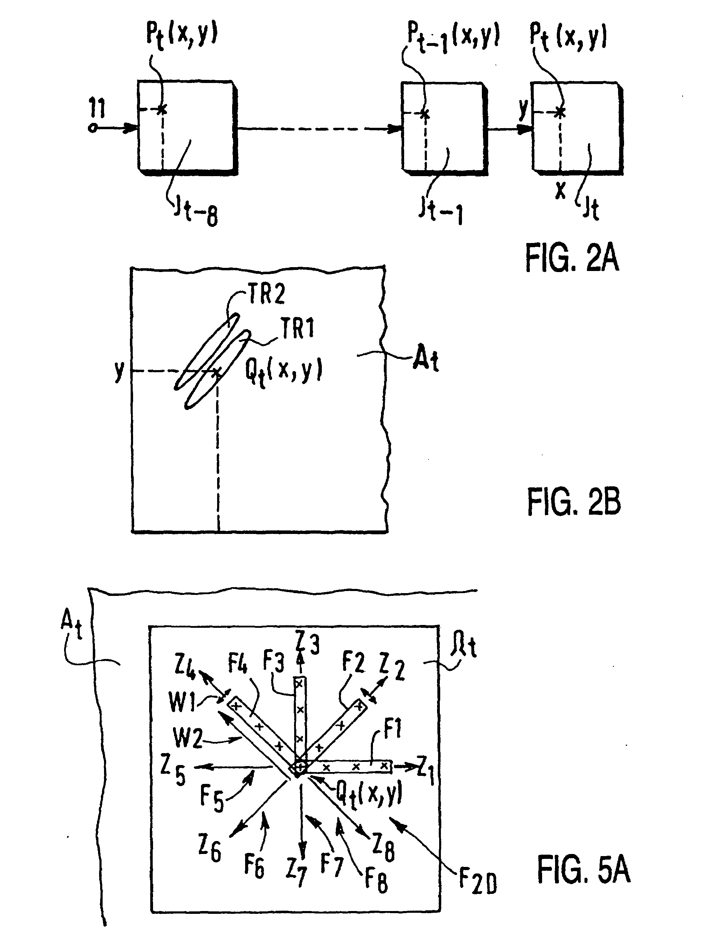

La FIG.1B représente un système de traitement d'image 30 ayant des moyens de réduction du bruit 10, 20, qui s'appliquent dans une image d'une séquence d'images bruitées, dans les régions d'image dépourvues d'objet en mouvement et aussi dans les régions d'images incluant au moins un objet en mouvement. La FIG.2A représente à titre d'exemple une séquence d'images bruitées où les images successives sont notées $J_{t-8}$..., $J_{t-1}$, $J_t$. Ce système 30 a la possibilité d'opérer en temps réel en traitent la dernière image $J_t$ observée dans la séquence.

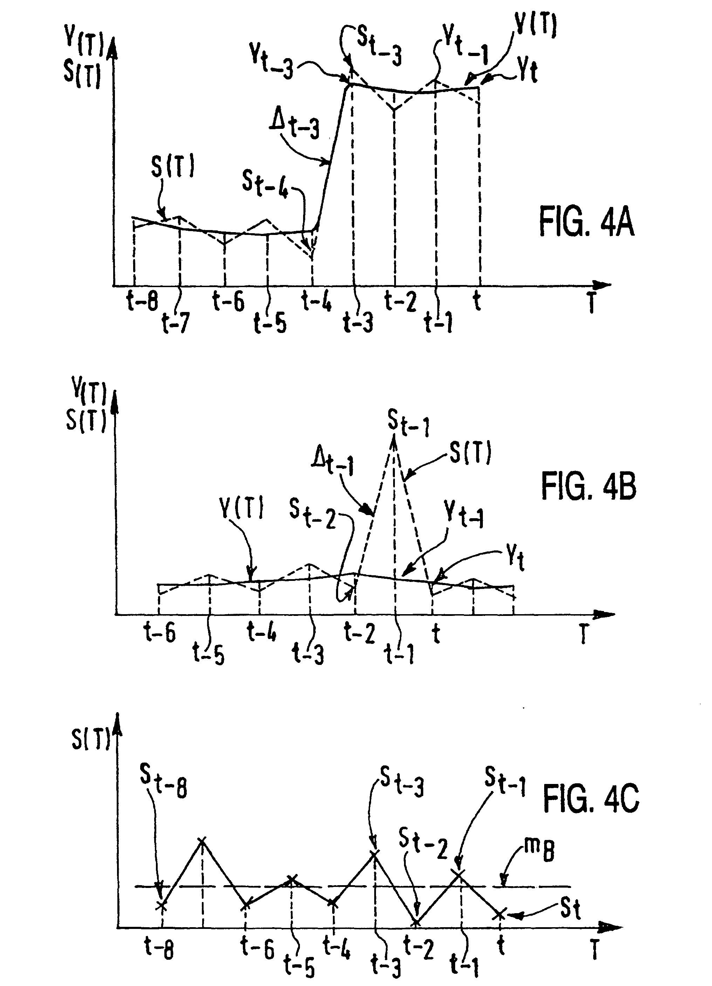

Les FIGs.4A et 4B représentent des signaux temporels bruités S(T) et des signaux temporels Y(T) filtrés du bruit. Le signal temporel bruité S(T) est formé en prélevant dans la séquence d'images, à un point P de localisation donnée x,y, des échantillons bruités successifs $S_{t-8}$,... $S_{t-1}$, $S_t$ représentant l'intensité du point P (x,y) dans les images successives, en fonction d'une numérotation ou repérage temporel t-8..., t-1, t des images de la séquence. Le signal temporel filtré Y(T) est formé des échantillons successifs $Y_{t-8}$,... $Y_{t-1}$, $Y_t$ filtré par le système 30, et correspondant aux échantillons bruités prélevés à la localisation donnée x,y dans les images d'origine de la séquence.

En référence à la FIG.1B, le système de traitement d'image 30 comprend des moyens de filtrage temporel 10 qui reçoivent à leur entrée 11 un échantillon $S_t(x,y)$ de signal temporel bruité et qui fournissent à leur sortie 16 un échantillon correspondant $Y_t(x,y)$ de signal filtré temporellement et récursivement. Lesdits moyens de filtrage temporel 10 comprennent des moyens de sommation 14 pour effectuer une somme entre un échantillon $Y_{t-1}(x,y)$ d'une image précédente de la séquence, déjà filtré temporellement par les moyens de filtrage temporel 10, et un échantillon $\Delta_t(x,y)$ d'une image des différences $A_t$ pondéré par un facteur de récursion $K_t$. L'image des différences $A_t$ est formée en référence à la FIG.2B entre l'image bruitée $J_t$ et une image précédente de la séquence déjà filtrée. En référence aux FIGs.1B et 2B, ledit échantillon $\Delta_t(x,y)$ est calculé en un point $Q_t(x,y)$ de l'image des différences $A_t$ par des moyens de sommation 12 qui soustraient la valeur de l'échantillon bruité $S_t(x,y)$ de la valeur de l'échantillon $Y_{t-1}(x,y)$ déjà filtré. L'échantillon $Y_{t-1}(x,y)$ déjà filtré temporellement récursivement provient de moyens de mémorisation ou de délai MEM1 référencés 15. Les moyens de filtrage temporel récursif 10 effectuent donc des calculs pour fournir un échantillon filtré $Y_t(x,y)$ tels que :

$$Y_t(x,y) = Y_{t-1}(x,y) + K_t\Delta_t(x,y) \qquad 1)$$

où

$$\Delta_t(x,y) = S_t(x,y) - Y_{t-1}(x,y) \qquad 2)$$

Le système de traitement d'image 30 comprend en outre des moyens 20 pour générer le facteur de récursion $K_t$ approprié à pondérer l'échantillon $\Delta_t(x,y)$ de l'image des différences dans la relation de filtrage temporel récursif référencée 1).

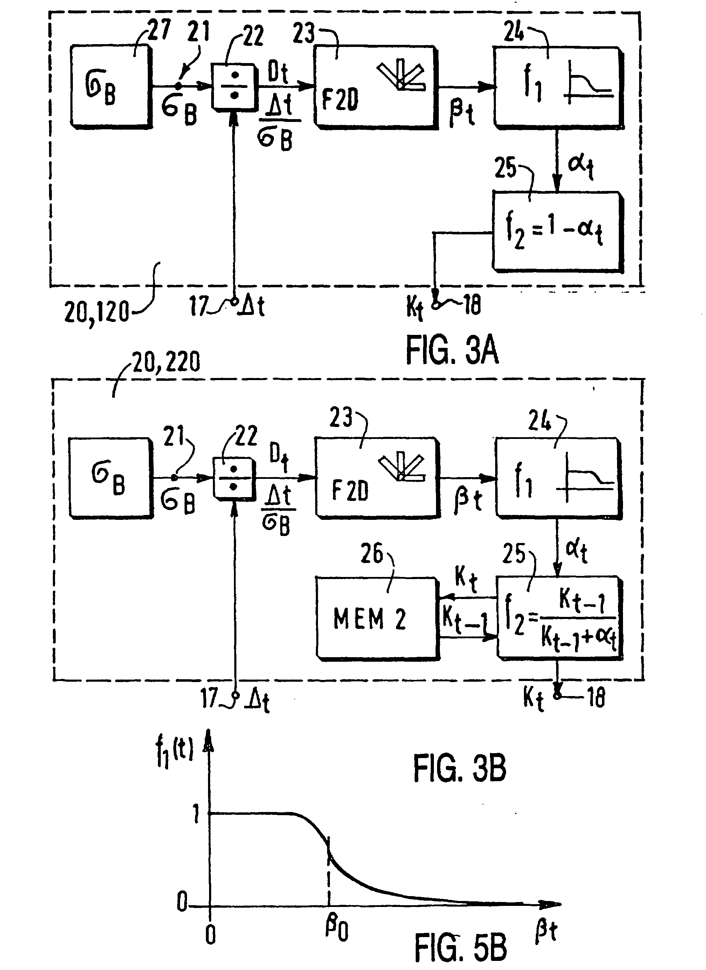

En référence aux FIG.3A et 3B, les moyens de génération 20 du facteur de récursion $K_t$ comprennent une entrée 17 pour l'échantillon $\Delta_t(x,y)$ de l'image des différences, une entrée 21 pour un valeur $\sigma_B$ de normalisation appelée écart type du bruit, et des moyens de calcul 22 pour effectuer la normalisation de l'échantillon $\Delta_t(x,y)$ par l'écart type du bruit $\sigma_B$, et ainsi fournir un échantillon de différences normalisé formulé par

$$D_t(x,y) = \Delta_t(x,y)/ \sigma_B \qquad 3)$$

Ledit échantillon de différence normalisé $D_t(x, y)$ est alors traité par un filtre spatial bidimensionnel 23 noté $F_{2D}$ qui effectue un lissage non linéaire bidimensionnel orienté autour du point $Q_t(x,y)$ de localisation x, y donnée dans l'image des différences $A_t$ considérée.

Ce filtre spatial 23 fournit une mesure de probabilité de mouvement notée $\beta_t(x,y)$ et formulée par :

$$\beta_t(x,y) = F_{2D} [D_t(x,y)] \qquad 4)$$

Les moyens 20 de génération de $K_t$ comprennent ensuite des moyens de calcul 24 pour appliquer une fonction scalaire décroissante notée $f_1$ sur la mesure de probabilité de mouvement $\beta_t(x,y)$, et pour fournir un coefficient noté $\alpha_t$ et formulé par

$$\alpha_t = f_1[\beta_t(x,y)] \qquad 5)$$

Lesdits moyens 20 de génération de $K_t$ comprennent en outre des moyens de calcul 25 pour appliquer une fonction $f_2$ sur ledit coefficient $\alpha_t$, qui fournit le facteur de récursion $K_t$ recherché selon la formulation

$$K_t = f_2(\alpha_t) \qquad 6)$$

La fonction $f_2$ de génération du facteur de récursion $K_t$ peut être une relation récursive ou non récursive. Le système de traitement d'image, qui comprend déjà le filtre temporel récursif 10, est alors respectivement ou bien doublement récursif, ou bien simplement récursif.

En référence aux FIGs.3A et 3B, les moyens de génération du facteur de récursion $K_t$ sont décrits ci-après, à titre non limitatif, dans deux exemples de réalisation respectivement référencés 120 et 220. Les moyens de calcul 22 sont constitués par un diviseur qui reçoit l'écart type du bruit $\sigma_B$ et l'échantillon $\Delta_t(x,y)$ de l'image des différences $A_t$ provenant du sommateur 12 du bloc 10. Les moyens de calcul 22 fournissent l'échantillon des différences normalisé $D_t(x,y)$. On rappelle que l'écart type du bruit $\sigma_B$ est la racine carrée de la variance du bruit $\sigma_B^2$ au point $Q_t(x,y)$ de l'image $A_t$ des différences. En référence à la FIG.4C, qui représente un signal temporel bruité S(T), l'écart type du bruit peut être obtenu en calculant d'abord la variance du bruit $\sigma_B^2$ comme la moyenne des écarts au carré du bruit d'un nombre donné d'échantillons du signal bruité S(t), lesdits écarts étant mesurés par rapport à la moyenne d'intensité $m_B$ desdits échantillons temporels. Le calcul de $\sigma_B$ comme la racine carrée de la variance du bruit ainsi évaluée est une approximation convenable. Les valeurs de l'écart type du bruit $\sigma_B$ peuvent être fournies par une table 27 appelée LUT (Look Up Table).

L'échantillon des différences normalisé $D_t(x,y)$ est passé dans le filtre spatial bidimensionnel 23 noté $F_{2D}$ pour fournir la mesure de probabilité de mouvement $\beta_t(x,y)$. En référence à la FIG.5A, ledit filtre spatial 23 effectue un lissage non linéaire bidimensionnel orienté, et comprend à cet effet une pluralité N d'opérateurs linéaires formés de sous-filtres $F_1..,F_N$ linéaires disposés radialement autour d'un point commun placé à une de leurs extrémités, coïncidant avec le point $Q_t(x,y)$ de l'image de différences $A_t$ à filtrer. Les sous-filtres sont régulièrement répartis dans l'espace selon des axes QZ1 à QZN, espacés d'angles $2\pi/N$. La dimension des supports des sous-filtres est W2 selon les axes QZ1,..., QZN et W1 perpendiculairement auxdits axes, avec W2 > W1. Par exemple W1 égale 1 ou 2 pixels et W2 égale 5 à 10 pixels. Les sous-filtres effectuent des moyennes à coefficients constants, ou décroissants à partir du point $Q_t(x,y)$ d'extrémité. Par exemple, N = 8 directions sont suffisantes. Les sous-filtres calculent au point $Q_t(x,y)$, un nombre N, par exemple 8, de valeurs moyennes notées M1(Q), M2(Q)... M8(Q).

Dans une image des différences telle que $A_t$ sur la FIG.2B, un mouvement tel que correspondant au front de montée $\Delta_{t-3}$ du signal temporel sur la FIG.4A, engendre des traînées notées TR1 et TR2, formées en général de deux traînées respectivement positive et négative ou l'inverse selon le contraste de l'objet en mouvement et le sens. Le filtre spatial bidimensionnel $F_{2D}$ rehausse l'intensité des échantillons spatialement cohérents dans l'image des différences $A_t$. Donc les traînées TR1, TR2 de l'image des différences, qui sont des structures cohérentes fines et orientées sont rehaussées par le passage du support de sous-filtre de même orientation.

Le filtre spatial $F_{2D}$ comprend en outre un opérateur de sélection pour sélectionner

    une valeur minimale notée MIN($F_{2D}$)
    et une valeur maximale notée MAX($F_{2D}$)

entre les N = 8 valeurs moyennes M1(Q) à M8(Q) ; puis un opérateur de sélection pour sélectionner entre MIN($F_{2D}$) et MAX($F_{2D}$) la valeur la plus proche de l'intensité normalisée $D_t(x,y)$ du point $Q_t(x,y)$ de l'image des différences $A_t$, notée OPT($F_{2D}$) telle que :

$$OPT(F_{2D}) = MAX (F_{2D}) \text{ si } | MAX(F_{2D}) - D_t(x,y)|$$

$$< | MIN(F_{2D}) - D_t(x,y)| \qquad 7a)$$

ou bien

$$OPT(F_{2D}) = MIN(F_{2D}) \qquad 7b),$$

dans le cas inverse.

La valeur optimale calculée OPT($F_{2D}$) est notée $\beta_t$ pour simplifier et est une mesure de probabilité de mouvement donnée par le filtrage spatial $F_{2D}$ de l'image $A_t$ des différences d'intensité entre l'image bruité $J_t$ et l'image déjà filtrée à un instant précédent, en considérant des pixels correspondant, ayant même localisation x,y. L'évaluation de $\beta_t$ permet de séparer les valeurs d'intensité dues au bruit de celles qui correspondent à un mouvement. En effet, seules les valeurs correspondant à un mouvement sont cohérentes. On tire donc avantage des structures cohérentes constituées par les traînées dues à un mouvement dans l'image des différences pour séparer une composante due au bruit donc spatialement non-cohérente, de composantes dues à un ou des mouvement(s) donc spatialement cohérentes. Ainsi la détection de mouvement est insensible au bruit. Cette détection de mouvement entre dans le calcul du facteur de récursion $K_t$ et améliore le calcul de la discontinuité temporelle $\Delta_t(x,y)$.

La mesure $\beta_t$ de probabilité de mouvement est ensuite soumise à la fonction scalaire $f_1$, par exemple telle que représentée sur la FIG.5B. Cette fonction est strictement décroissante et présente un point d'inflexion pour une valeur $\beta_t = \beta_0$. Cette fonction f1 permet de mieux éliminer le bruit en conservant les mesures correspondant au mouvement lorsque $\beta_t > \beta_0$, et en éliminant les mesures correspondant au bruit lorsque $\beta_t < \beta_0$. Le résultat du passage de la fonction scalaire f1 sur $\beta_t$ est noté $\alpha_t$ qui est un coefficient permettant de calculer le facteur de récursion $K_t$.

Dans un mode de réalisation 120, le facteur de récursion $K_t$ est calculé de manière simple dans le bloc 25 par une première fonction formulée par

$$f_2 = 1 - \alpha t \qquad 6a).$$

Le résultat $K_t$ est disponible au noeud 18.

Dans un mode de réalisation récursif 220, le facteur de récursion $K_t$ est calculé dans le bloc 25 en utilisant une opération d'intégration du passé, par une autre fonction formulée par :

$$f_2 = K_{t-1}/ (K_{t-1} + \alpha_t) \qquad 6b)$$

où $K_{t-1}$ est un coefficient de récursion calculé dans le passé en correspondance de l'échantillon déjà filtré $Y_{t-1}$. A cet effet $K_{t-1}$ est stocké dans des moyens de mémorisation ou délai MEM2 référencés 26.

Ce filtrage permet d'éliminer les trous, ainsi que les pics de bruit tels que $S_{t-1}$ comme montré sur la FIG.4B. Ce filtrage permet de conserver les fins détails subissant un mouvement comme montré en $\Delta_{t-3}$ sur la FIG.4A. Ce filtrage préserve l'intensité des fins objets en mouvement tout en diminuant le bruit, ce qui augmente le rapport signal sur bruit d'un facteur 2 environ.

Ce résultat peut être amélioré en séparant mieux les composantes du signal dues au bruit de celles qui sont dues à un mouvement.

Par le passage de l'opérateur OPT($F_{2D}$), on avait obtenu un signal filtré ayant un lobe de bruit noté LB formé des points ayant un niveau d'intensité dû au bruit détectés par les différents sous-filtres F1 à FN, ce lobe LB étant centré sur l'intensité zéro, et occasionnellement un ou plusieurs lobes de mouvement notés LM1, LM2 ... selon que l'image des différences contient une ou deux traînées parallèles TR1, TR2 dues à un mouvement ; les lobes de mouvement LM1, LM2 ... étaient formés de points d'intensités différentes de celles du lobe de bruit LB et étaient disposés de part et d'autre dudit lobe de bruit LB par rapport au zéro d'intensité.

L'opérateur OPT($F_{2D}$) précédent est remplacé par un opérateur OPT'($F_{2D}$) qui calcule d'abord OPT ($F_{2D}$) comme indiqué précédemment. Le nouvel opérateur OPT'($F_{2D}$) calcule maintenant une nouvelle valeur $\beta_t$ en effectuant une sélection, parmi les moyennes M1 (Q), M2(Q),... MN(Q), d'une ou plusieurs moyennes notées $M_n$, qui sont les plus proches de la valeur OPT($F_{2D}$) précédemment déterminée en prenant en compte un seuil $\Theta$, selon la relation suivante :

$$| M_n(F_{2D}) - OPT(F_{2D})| \leq \Theta \qquad 8)$$

où $M_n(F_{2D})$ est une des moyennes M1(Q) à MN(Q) et où $\Theta$ est un seuil qui dans la présente application est pris égal à 1, du fait que le filtre spatial $F_{2D}$ est appliqué à l'échantillon $D_t(x,y)$ normalisé par l'écart type du bruit $\sigma_B$. L'opérateur OPT'($F_{2D}$) calcule ensuite une moyenne notée MOY[$M_n(F_{2D})$] des valeurs $M_n(F_{2D})$ sélectionnées par la relation 8), qui est la mesure de probabilité de mouvement $\beta_t$ recherchée.

Dans ces conditions, le rapport signal sur bruit après filtrage selon l'invention est augmenté d'un facteur au moins égal à 6(six).

**Revendications**

1. Système de traitement d'une image bruitée dans une séquence d'images bruitées, incluant des moyens pour extraire un échantillon temporel bruité à une localisation donnée dans l'image bruitée et pour fournir un échantillon correspondant filtré temporellement récursivement pour construire une image filtrée du bruit, ce système comprenant :

   des moyens de filtrage temporel récursif ayant des moyens pour effectuer une somme d'un échantillon correspondant ($Y_{t-1}$) d'une image précédente déjà filtrée de la séquence avec un échantillon [$\Delta_t(x,y)$] correspondant d'une image des différences ($S_t-Y_{t-1}$) entre l'image bruitée et l'image précédente filtrée, et pondéré par un facteur de récursion ($K_t$),
   **caracterisé par**
   des moyens de filtrage spatial bidimensionnel ($F_{2D}$) appliqués à ladite image des différences, pour rehausser des échantillons spatialement cohérents et fournir une mesure de probabilité de mouvement ($\beta_t$) liée auxdits échantillons spatialement cohérents,
et des moyens d'application d'une fonction scalaire ($f_1$) pour générer ledit facteur de récursion ($K_t$) en dépendance de ladite mesure de probabilité de mouvement ($\beta_t$).

**2.** Système selon la revendication 1, comprenant en outre, pour générer ledit facteur de récursion ($K_t$), des moyens de calcul pour appliquer une fonction ($f_2$) non récursive sur ladite fonction scalaire ($f_1$).

**3.** Système selon la revendication 1, comprenant en outre, pour générer ledit facteur de récursion ($K_t$), des moyens de calcul pour appliquer une fonction ($f_2$) récursive sur ladite fonction scalaire ($f_1$).

**4.** Système selon la revendication 1, dans lequel les moyens de filtrage spatial ($F_{2D}$) comprennent des moyens de moyennage régulièrement spatialement orientés autour d'un échantillon de ladite image des différences, fournissant une valeur filtrée minimale et une valeur filtrée maximale d'intensités, et des moyens de sélection fournissant une valeur optimale d'intensité qui est choisie parmi les valeurs minimale et maximale comme la valeur la plus proche de l'intensité non filtrée du dit échantillon, pour fournir ladite mesure de probabilité de mouvement ($\beta_t$).

**5.** Système selon la revendication 1, dans lequel les moyens de filtrage spatial ($F_{2D}$) comprennent des moyens de moyennage régulièrement spatialement orientés autour d'un échantillon de ladite image des différences, fournissant respectivement une valeur moyenne sur chaque orientation, des moyens de sélection fournissant d'une part une valeur filtrée minimale et une valeur filtrée maximale d'intensités, et d'autre part une valeur optimale d'intensité qui est choisie parmi les valeurs minimale et maximale comme la valeur la plus proche de l'intensité non filtrée du dit échantillon, et des moyens de calcul fournissant alors une moyenne de valeurs moyennes sur chaque orientation choisies parmi lesdites valeurs moyennes comme les plus proches de ladite valeur optimale en fonction d'un seuil prédéterminé, pour fournir ladite mesure de probabilité de mouvement ($\beta_t$).

**6.** Système selon la revendication 1, dans lequel les moyens d'application de la fonction scalaire ($f_1$) sont formés par une tabulation d'une fonction décroissante de la mesure de probabilité de mouvement.

**7.** Système selon la revendication 2, dans lequel, des moyens pour fournir une fonction ($f_2$) non récursive comprennent la tabulation d'une relation $1-\alpha_t$, appliquée à un coefficient ($\alpha_t$) résultant de l'application de ladite fonction scalaire ($f_1$) sur la valeur filtrée d'intensité ($\beta_t$) fournie par ledit filtrage spatial.

**8.** Système selon la revendication 3, dans lequel, des moyens pour fournir une fonction ($f_2$) récursive comprennent la tabulation d'une relation $K_{t-1}/(K_{t-1}+\alpha_t)$, appliquée à un coefficient d'intégration du passé ($\alpha_t$) résultant de l'application de ladite fonction scalaire ($f_1$) sur la valeur filtrée d'intensité ($\beta_t$) fournie par ledit filtrage spatial, et à un facteur de récursion ($K_{t-1}$) relatif à ladite image précédemment temporellement filtrée.

**9.** Appareil d'examen aux rayons X, incluant un détecteur de rayons X pour produire une séquence d'images successives, et des moyens pour convertir ces images successives en une séquence d'images numériques, cet appareil comprenant un système de traitement d'images selon l'une des revendications 1 à 8 pour réduire le bruit dans les images de la séquence, et un dispositif de visualisation des images de la séquence.

**Patentansprüche**

**1.** System zur Verarbeitung eines verrauschten Bildes in einer Bildsequenz mit Mitteln für die Entnahme eines verrauschten temporalen Musters an einer bestimmten Lokalisierung im verrauschten Bild und für die Ausgabe eines dementsprechend rekursiv temporal gefilterten Musters für den Aufbau eines vom Rauschen gefilterten Bildes, wobei das System enthält:

Mittel für die rekursive temporale Filterung mit Mitteln zur Bildung einer Summe eines entsprechenden Musters ($Y_{t-1}$) eines bereits gefilterten vorhergehenden Bildes der Sequenz mit einem Muster [$\Delta_t(x,y)$] entsprechend einem Bild der Differenzen ($S_t$-$Y_{t-1}$) zwischen dem verrauschten Bild und dem gefilterten vorhergehenden Bild und von einem Rekursionsfaktor ($K_t$) gewichtet, **gekennzeichnet durch**
Mittel für die zweidimensionale spatiale Filterung ($F_{2D}$), welche auf das besagte Bild der Differenzen angewandt wird, um die Muster spatial kohärent aufzuwerten und eine Messung der Bewegungswahrscheinlichkeit ($\beta_t$) in Verbindung mit den besagten spatial kohärenten Mustern anzuwenden, und
Mittel zur Anwendung einer Skalarfunktion ($f_1$), um den besagten Rekursionsfaktor ($K_t$) abhängig von der besagten Messung der Bewegungswahrscheinlichkeit ($\beta_t$) zu generieren.

**2.** System nach Anspruch 1 mit außerdem für die Generierung des besagten Rekursionsfaktors ($K_t$) Berechnungsmitteln für die Anwendung einer nicht rekursiven Funktion ($f_2$) auf die besagte Skalarfunktion.

**3.** System nach Anspruch 1 mit außerdem für die Generierung des besagten Rekursionsfaktors ($K_t$) Berechnungsmitteln für die Anwendung einer rekursiven Funktion ($f_2$) auf die besagte Skalarfunktion.

**4.** System nach Anspruch 1, in dem die Mittel für die spatiale Filterung ($F_{2D}$) Mittel enthalten für das regelmäßige spatiale Bestimmen des Mittelwertes ausgerichtet um ein Muster des besagten Differenzenbildes, um einen minimalen gefilterten und einen maximalen gefilterten Intensitätenwert auszugeben, und Auswahlmittel für die Ausgabe eines optimalen Intensitätswertes, welcher unter den minimalen und maximalen Werten als der nächste Wert an der nicht gefilterten Intensität des besagten Musters liegt, um die besagte Messung der Bewegungswahrscheinlichkeit ($\beta_t$) auszugeben.

**5.** System nach Anspruch 1, in dem die Mittel für die spatiale Filterung ($F_{2D}$) Mittel enthalten für das regelmäßige spatiale Bestimmen des um ein Muster des besagten Differenzenbildes ausgerichteten Mittelwertes, um respektive einen Mittelwert von jede Ausrichtung auszugeben, während die Auswahlmittel einerseits einen minimalen gefilterten und einen maximalen gefilterten Intensitätenwert und andererseits einen optimalen Intensitätswert ausgeben, welcher unter den minimalen und maximalen Werten als der nächste Wert an der nicht gefilterten Intensität des besagten Musters ausgewählt wurde, wobei die Berechnungsmittel dann einen Durchschnitt der Mittelwerte von jeder Ausrichtung ausgeben, welche unter den besagen Mittelwerten als die nächsten an dem besagten optimalen Wert unter Berücksichtigung einer vorbestimmten Schwelle gewählt wurden, um die besagte Messung der Bewegungswahrscheinlichkeit ($\beta_t$) auszugeben.

**6.** System nach Anspruch 1, in dem die Mittel für die Anwendung einer Skalarfunktion ($f_t$) den Tabellenwerten einer abnehmenden Funktion der Messung der Bewegungswahrscheinlichkeit entnommen werden.

**7.** System nach Anspruch 2, in dem die Mittel für die Bereitstellung einer nicht rekursiven Funktion ($f_2$) die Tabellenwerte einer Relation $1-\alpha_t$ enthalten, angewandt auf einen Koeffizienten ($\alpha_t$), was zur Anwendung der besagten Skalarfunktion ($f_1$) auf den gefilterten Intensitätswert ($\beta_t$) führt, welchen die besagte spatiale Filterung ausgibt.

**8.** System nach Anspruch 3, in dem die Mittel für die Bereitstellung einer rekursiven Funktion ($f_2$) die Tabellenwerte einer Relation $K_{t-1} / (K_{t-1}+\alpha_t)$ enthalten, angewandt auf einen Integrationskoeffizienten der Vergangenheit ($\alpha_t$), ausgehend aus der Anwendung der besagten Skalarfunktion ($f_1$) auf den gefilterten Intensitätswert ($\beta_t$), ausgehend von der besagten spatialen Filterung, und einen Rekursionsfaktor ($K_{t-1}$) in Bezug auf das besagte zuvor temporal gefilterte Bild.

**9.** Röntgenstrahlen-Untersuchungsgerät mit einem Röntgenstrahlendetektor für die Produktion einer aufeinanderfolgenden Bildsequenz und Mitteln für die Konvertierung dieser aufeinanderfolgenden Bilder in eine digitale Bildsequenz, wobei dieses Gerät ein Bildverarbeitungssystem nach einem der Ansprüche 1 bis 8 enthält, um das Rauschen in den Bildern der Sequenz zu reduzieren, sowie eine Vorrichtung, um die Bilder der Sequenz anzuzeigen.

## Claims

**1.** A system for the processing of a noisy image in a sequence of noisy images, which includes means for extracting a noisy temporal sample at a given location in the noisy image and for supplying a corresponding, recursively temporally filtered sample for the formation of a noise-filtered image, said system including:

- recursive temporal filtering means which include means for forming a sum of a corresponding sample ($Y_{t-1}$) of an already filtered preceding image of the sequence and a corresponding sample [$\Delta_t(x,y)$] of a difference image ($S_t$-$Y_{t-1}$) formed between the noisy image and the filtered preceding image and weighted by a recursion factor ($K_t$), **characterized by**

- two-dimensional spatial filtering means ($F_{2D}$) which are applied to said difference image in order to enhance spatially coherent samples and to supply a motion probability measure ($\beta_t$) which is linked to said spatially coherent samples,. and means for applying a scalar function ($f_1$) in order to generate said recursion factor ($K_t$) in dependence on said motion probability measure ($\beta_t$).

**2.** A system as claimed in Claim 1 which, in order to generate said recursion factor ($K_t$), also includes calculation means for applying a non-recursive function ($f_2$) to said scalar function ($f_1$).

**3.** A system as claimed in Claim 1 which, in order to generate said recursion factor ($K_t$), also includes calculation means for applying a recursive function

($f_2$) to said scalar function ($f_1$).

4. A system as claimed in Claim 1 in which the spatial filtering means ($F_{2D}$) include averaging means which are regularly spatially oriented around a sample of said difference image, yielding a minimum filtered and a maximum filtered intensity value, and selection means which supply an optimum intensity value which is chosen from among the minimum and maximum values as the value nearest to the non-filtered intensity of said sample in order to provide said motion probability measure ($\beta_t$).

5. A system as claimed in Claim 1 in which the spatial filtering means ($F_{2D}$) include averaging means which are regularly spatially oriented around a sample of said difference image and supply a respective mean value for each orientation, selection means which supply on the one hand a minimum filtered and a maximum filtered intensity value, and on the other hand an optimum intensity value which is chosen from among the minimum and maximum values as the value nearest to the non-filtered intensity of said sample, and calculation means which supply a mean value of the mean values for each orientation chosen from among said mean values as the values nearest to said optimum value as a function of a predetermined threshold in order to supply said motion probability measure ($\beta_t$).

6. A system as claimed in Claim 1 in which the means for applying the scalar function ($f_1$) are formed by a tabulation of a decreasing function of the motion probability measure.

7. A system as claimed in Claim 2 in which means for supplying a non-recursive function ($f_2$) include the tabulation of a relation $1-\alpha_t$ applied to a coefficient ($\alpha_t$) resulting from the application of said scalar function ($f_1$) to the filtered intensity value ($\beta_t$) supplied by said spatial filtering.

8. A system as claimed in Claim 3 in which means for supplying a recursive function ($f_2$) include the tabulation of a relation $K_{t-1}/K_{t-1}+\alpha_t$ applied to an integration function of the past ($\alpha_t$) resulting from the application of said scalar function ($f_1$) to the filtered intensity value ($\beta_t$) supplied by said spatial filtering, and to a recursion factor ($K_{t-1}$) relating to said preceding temporally filtered image.

9. An X-ray examination apparatus which includes an X-ray detector for forming a sequence of successive images and means for converting said successive images into a sequence of digital images, said apparatus also including an image processing system as claimed in one of the Claims 1 to 8 in order to reduce the noise in the images of the sequence, and a device for displaying the images of the sequence.

FIG. 1A

FIG. 1B

$P_t(x,y)$

$P_{t-1}(x,y)$   $P_t(x,y)$

11

$y$

$x$

$J_{t-8}$   $J_{t-1}$   $J_t$

## FIG. 2A

TR2

TR1

$y$   $Q_t(x,y)$

$A_t$

## FIG. 2B

$A_t$   $J_t$

$Z_3$

$Z_4$   F4   F3   F2   $Z_2$

W1

W2   F1

$Z_5$   $Z_1$

F5   $Q_t(x,y)$

$Z_6$   $Z_8$

$Z_7$   F7

F6   F8   F2D

## FIG. 5A

FIG. 3A

FIG. 3B

FIG. 5B

11

FIG. 4A

FIG. 4B

FIG. 4C